Europäisches Patentamt

**European Patent Office**

Office européen des brevets

(11) Publication number: **0 281 301 B1**

## EUROPEAN PATENT SPECIFICATION

(45) Date of publication of patent specification: **27.12.91**

(51) Int. Cl.⁵: **C03B 7/14**, C03B 7/16, C03B 9/40, G05B 19/04

(21) Application number: **88301506.7**

(22) Date of filing: **23.02.88**

(54) Gob distributor.

(30) Priority: **02.03.87 US 20273**

(43) Date of publication of application:
**07.09.88 Bulletin 88/36**

(45) Publication of the grant of the patent:
**27.12.91 Bulletin 91/52**

(84) Designated Contracting States:
**DE FR GB IT**

(56) References cited:
**EP-A- 0 100 239**
**EP-A- 0 105 716**

(73) Proprietor: **Emhart Glass Machinery Investments Inc.**
**c/o RL&F Service Corp. One Rodney Square, 10th Floor 10th and King Streets Wilmington, Delaware 19801(US)**

(72) Inventor: **Peterson, George T.**
**24 Mellen Street**
**Bristol Connecticut 06010(US)**

(74) Representative: **Wetters, Basil David Peter et al**
**Emhart Patents Department Lyn House 39 The Parade**
**Oadby, Leicester LE2 5BB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to gob distributors which receive gobs from a gob feeder and redirect these gobs to discrete glassware forming stations.

In EP-A3-0100239 a gob distributor is disclosed which comprises gob scoop means for receiving a gob from a feeder and directing the received gob to a glassware forming station, a gob deflector, and means for moving the gob deflector between a delivery position, in which a gob from the feeder will be delivered to the gob scoop means, and a reject position, in which a gob from the feeder will be deflected away from the gob scoop means. The means for moving the gob deflector comprises an interceptor valve which operates to move the deflector between its delivery position and its reject position. The distributor includes a control system for causing the interceptor valve to operate at desired times to move the gob deflector, but does not disclose the detailed operation of the interceptor valve.

In EP-A1-0105716 a gob distributor is disclosed which comprises gob scoop means for receiving a gob from a feeder and directing the received gob to a glassware forming station, a gob deflector, and means for moving the gob deflector between a delivery position in which a gob from the feeder will be delivered to the gob scoop means, and a reject position, in which a gob from the feeder will be deflected away from the gob scoop means. This gob distributor is arranged for use with a triple gob glassware forming station, and comprises three such gob deflectors, each associated with an appropriate scoop means.

In commercial embodiments of gob distributors comprising gob deflectors, it is usual to operate the deflector by a piston acid cylinder device which is operated by an air operated fourway pilot valve itself operated by a solenoid controlled valve, as this provides acceptable operation of the deflector. The power off position of the deflector is the reject position and the air operated four-way pilot valve shifts the deflector between the delivery and reject positions during normal operation.

The deflector has been known to fail due to water and oil collecting in the pilot valve. This is very undesirable since an operator's safety is at stake. Efforts have accordingly been made to operate the deflector once every gob distributor cycle to remove any water and oil from the pilot valve by adjusting operating switches on the timing drum. These prior efforts have not proven successful.

It is accordingly an object of the present invention to provide an improved system for making sure that oil and water will not be collected in the pilot valve, thereby assuring that the deflector mechanism will operate in the intended manner.

The present invention provides a gob distributor comprising gob scoop means for receiving a gob from a feeder and directing the received gob to a glassware forming station

a gob deflector,

means for moving the gob deflector between a delivery position, in which a gob from the feeder will be delivered to the gob scoop means and a reject position, in which a gob from the feeder will be deflected away from the gob scoop means,

the means comprising an interceptor valve operation of which moves the deflector between its delivery position and its reject position, an air operated pilot valve which causes operation of the interceptor valve, and a solenoid valve which causes operation of the pilot valve

characterized in that the distributor comprises a pilot valve maintenance circuit for operating the pilot valve at selected intervals to free the pilot valve from oil or water which may accumulate therein, such operation of the pilot valve causing movement of the deflector from its delivery position but not far enough to reach its reject position

which circuit comprises a duration counter arranged to operate the solenoid valve and thus the pilot valve for a predetermined time insufficient to cause full movement of the deflector from its delivery position to its reject position,

a frequency counter to operate at a selected frequency

means for selecting the predetermined time of operation of the duration counter

and means for preventing the selection of the predetermined time and the selected frequency outside predetermined ranges of said time and said frequency.

Other objects and advantages of the present invention will become apparent from the following portion of this specification and from the accompanying drawings which illustrate, in accordance with the mandate of the patent statutes, a presently preferred embodiment incorporating the principles of the invention.

Referring to the drawings:

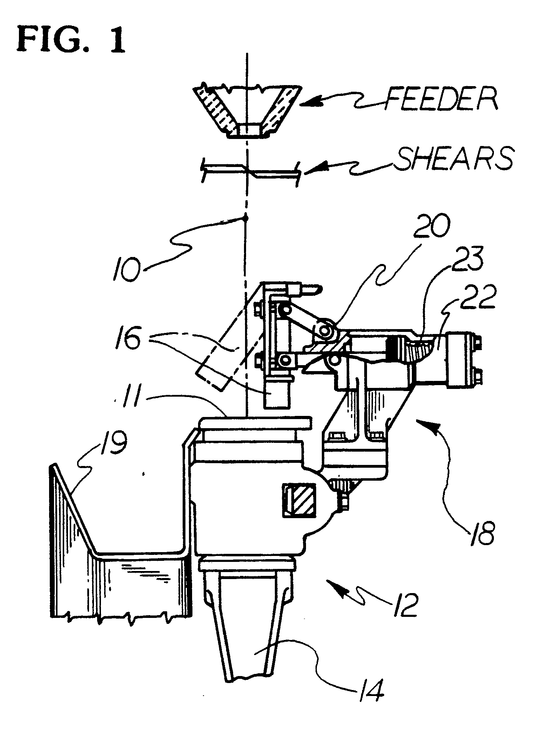

Figure 1 is an elevational view of a gob distributor;

Figure 2 is a schematic illustration of the interceptor valve control circuit;

Figure 3 is a flow chart illustrating the wink timer algorithm; and

Figure 4 is a flow chart illustrating the operation of the hand held terminal.

In glassware forming machines, molten glass is extruded as a continuous runner from a Feeder and is cut into discrete gobs by Shears which are advanced to define a gob having a selected length. The formed gob drops along a gravitational path 10 into the open end 11 of the gob distributor 12 where it is guided to the scoop 14 which redirects the gob to a selected through of an individual glassware forming section (not shown).

To prevent gobs from entering the gob distributor 12, the pivotally supported deflector 16 of an interceptor 18 can be pivoted from a remote deliver position where gobs will fall into the gob distributor to an advanced reject position (shown in phantom) in the path of a gob to deflect gobs into the cullet chute 19 by advancing the rod 20 of the interceptor valve 22. This valve 22 is spring 23 biased to the advanced operative position so that the event of power loss, the deflector 16 will be advanced to deflect gobs into the cullet chute 19. The interceptor valve 22 is a two-way valve which is operated by an air operated four-way Pilot Valve. In the deflector retracted position pressurized air is supplied to the left end of the interceptor valve 22 to force the valve to the deliver position. Whenever the Controller supplies the Solenoid Valve with an "off" signal, this valve will operate the Pilot Valve to shift the interceptor valve 22 to the reject position.

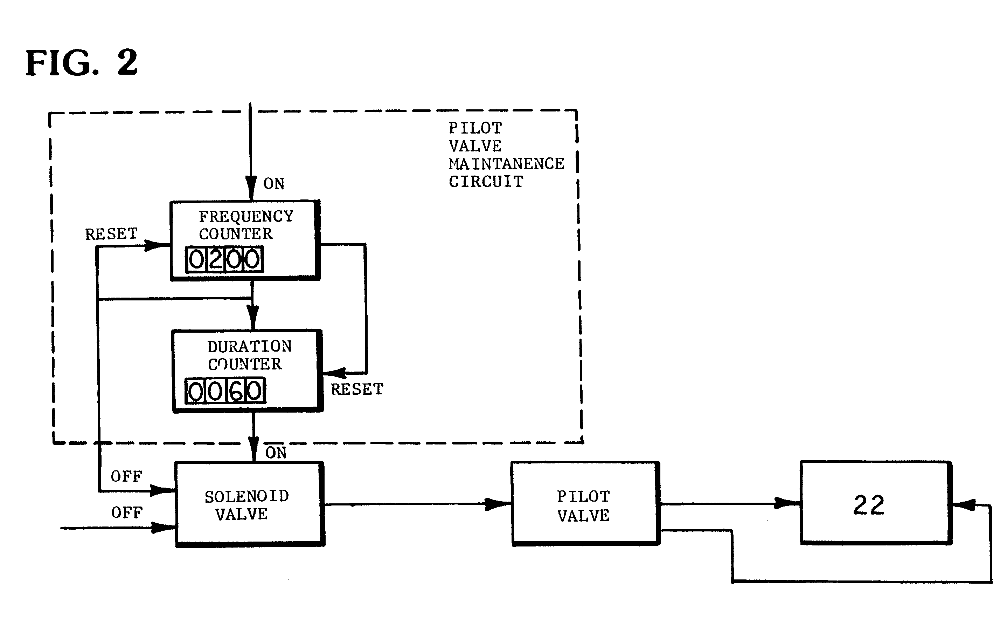

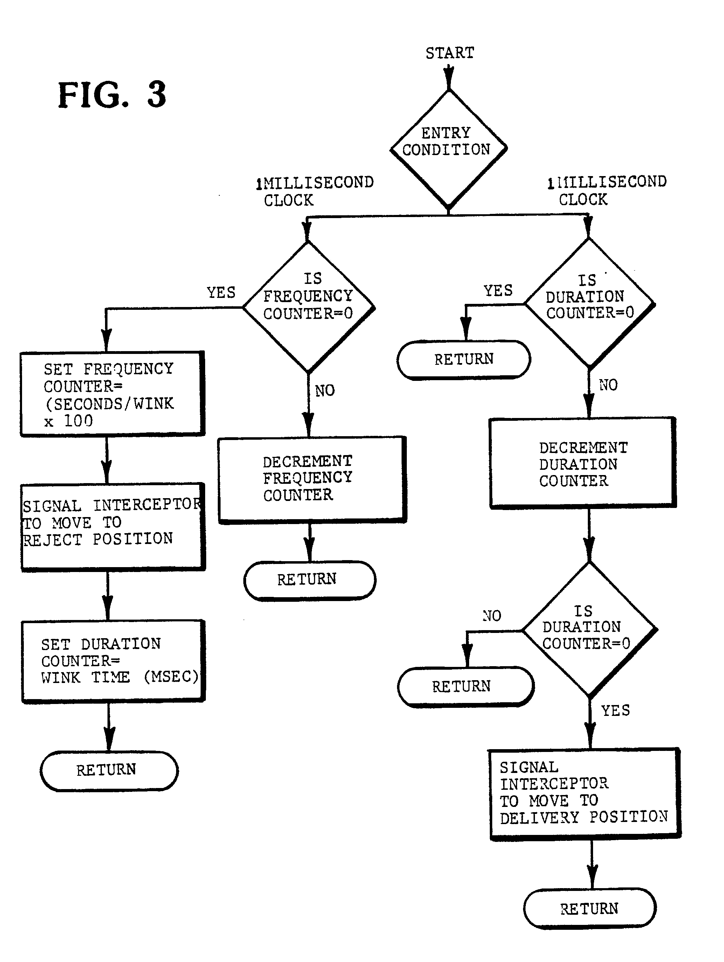

To momentarily operate the Pilot Valve to blow out any oil or water which may have accumulated, a Pilot Valve Maintenance Circuit is turned on. A Frequency Counter (a timer in a central processing unit) which can be set for a selected count is turned on whenever the gob distributor 12 is cycling and periodically turns on a Duration Counter (a timer in the central processing unit which is also setable). The frequency/duration algorithm is illustrated in Figure 3. The Frequency Counter is set to the desired count and then decremented to zero whereupon it is reset. Each time the Frequency Counter is reset the Duration Counter is set and the Solenoid Valve is turned off to advance the deflector towards the reject position. When the Duration Counter decrements to zero the solenoid is turned "on" thereby returning the deflector to its delivery position. This advancement of the deflector is commonly referred to as winking and the wink time is set to be small enough so that deflector will not advance far enough to interfere with a falling gob. The frequency count and the duration count are setable by an operator (the digital inputs shown in Figure 2 represent the digital inputs to a hand held terminal).

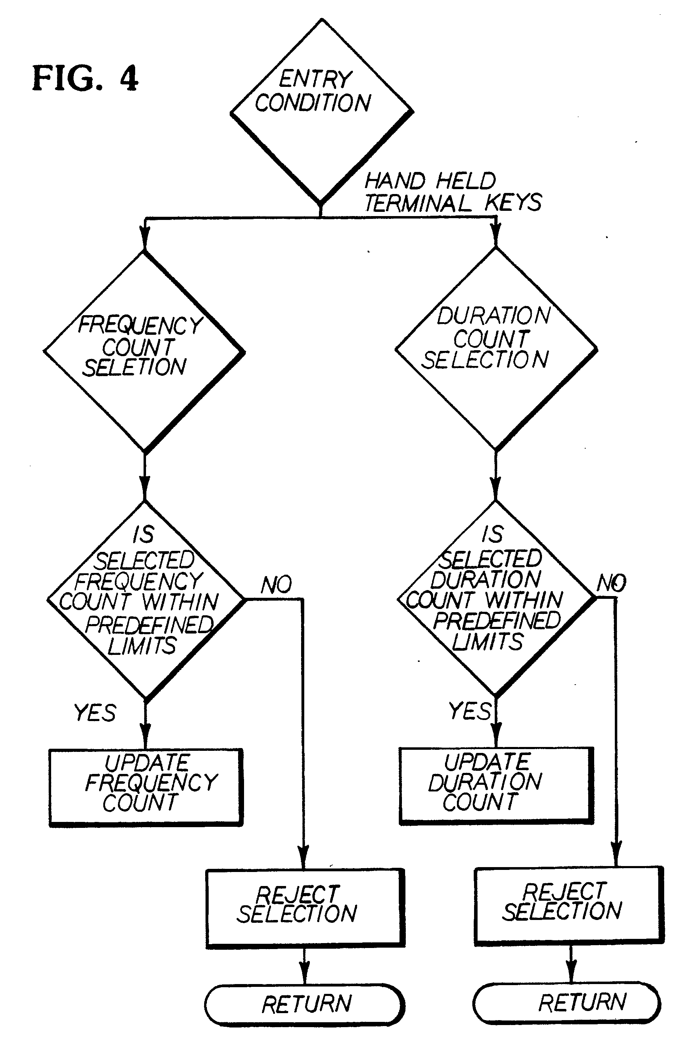

As can be seen from Figure 4 which illustrates the hand held terminal flow chart, the request count and duration count selected must be within acceptable limits or the Frequency Counter and Duration Counter will remain at their original settings which are within these acceptable limits. These ranges assure that the deflector 16 will "wink" at a frequency and for a duration sufficient to maintain the Pilot Valve in clear condition. This acceptance requirement prevents an operator from disabling the "wink" procedure and makes the winking procedure time rather than cycle dependent.

## Claims

1. A gob distributor comprising
    gob scoop means (14) for receiving a gob from a feeder and directing the received gob to a glassware forming station
    a gob deflector (16)
    means (18) for moving the gob deflector (16) between a delivery position, in which a gob from the feeder will be delivered to the gob scoop means (14) and a reject position, in which a gob from the feeder will be deflected away from the gob scoop means,
    the means (18) comprising an interceptor valve (22) operation of which moves the deflector (16) between its delivery position and its reject position, an air operated pilot valve which causes operation of the interceptor valve, and a solenoid valve which causes operation of the pilot valve
    characterized in that the distributor comprises a pilot valve maintenance circuit for operating the pilot valve at selected intervals to free the pilot valve from oil or water which may accumulate therein such operation of the pilot valve causing movement of the deflector (16) from its delivery position but not far enough to reach its reject position
    which circuit comprises
    a duration counter arranged to operate the solenoid valve and thus the pilot valve for a predetermined time insufficient to cause full movement of the deflector (16) from its delivery position to its reject position,
    a frequency counter to operate at a selected frequency
    means for selecting the predetermined time of operation of the duration counter
    and means for preventing the selection of the predetermined time and the selected frequency outside predetermined ranges of said time and said frequency.

2. A gob distributor according to claim 1 characterized in that the interceptor valve (22) includes a spring (23) for biasing the deflector (16) to the reject position.

## Revendications

1. Distributeur de paraisons comprenant :
    des moyens formant cuillère à paraisons (14) destinés à recevoir une paraison provenant d'un alimentateur et à diriger la paraison reçue vers un poste de moulage du verre,

un déflecteur de paraisons (16),

des moyens (18) servant à déplacer le déflecteur de paraisons (16) entre une position d'acheminement, dans laquelle une paraison issue de l'alimentateur sera acheminée aux moyens formant cuillère à paraisons (14), et une position de rejet, dans laquelle une paraison issue de l'alimentateur sera éloignée des moyens formant cuillère à paraisons ;

ces moyens (18) comprenant une valve d'intercepteur (22) dont la manoeuvre déplace le déflecteur (16) entre sa position d'acheminement et sa position de rejet, une valve pilote à commande pneumatique qui provoque le fonctionnement de la valve d'intercepteur, et une électrovalve qui provoque la manoeuvre de la valve pilote,

caractérisé en ce que le distributeur comprend un circuit de maintien de la valve pilote servant à faire manoeuvrer la valve pilote à des intervalles sélectionnés pour débarasser la valve pilote de l'huile ou de l'eau qui ont pu s'y accumuler, cette manoeuvre de la valve pilote provoquant un déplacement du déflecteur (16) qui l'éloigne de sa position d'acheminement mais pas suffisamment loin pour atteindre sa position de rejet,

lequel circuit comprend

un compteur de durée agencé pour faire manoeuvre l'électrovalve et, par conséquent, la valve pilote, dans un temps prédéterminé insuffisant pour provoquer le mouvement complet du déflecteur (16) de sa position d'acheminement à sa position de rejet ;

un compteur de fréquence servant à manoeuvrer à une fréquence sélectionnée, des moyens servant à sélectionner le temps prédéterminé de fonctionnement du compteur de durée,

et des moyens servant à empêcher la sélection du temps prédéterminé et de la fréquence sélectionnée en dehors de plages prédéterminées de valeurs de ce temps et de cette fréquence.

2. Distributeur de paraisons selon la revendication 1, caractérisé en ce que la valve d'intercepteur (22) comprend un ressort (23) tendant à placer le déflecteur (16) dans la position de rejet.

**Patentansprüche**

1. Tropfenverteiler mit einer Einrichtung (14) zum Aufnehmen eines Tropfens von einem Speiser und zum Richten des aufgenommenen Tropfens zu einer Glaswarenformstation, mit einer Tropfenablenkvorrichtung (16) und einer Einrichtung (18) zum Bewegen der Tropfenablenkvorrichtung (16) zwischen einer Abgabelage, in welcher ein Tropfen aus dem Speiser zu der Tropfenaufnahmeeinrichtung (14) abgegeben wird, und einer Abweislage, in welcher ein Tropfen aus dem Speiser von der Tropfenaufnahmeeinrichtung abgelenkt wird, wobei die Einrichtung (18) ein Interzeptorventil (22), während dessen Betriebes sich die Ablenkvorrichtung (16) zwischen ihrer Abgabelage und ihrer Abweislage bewegt, ein mit Luft betätigbares Führungsventil, welches den Betrieb des Interzeptorventiles verursacht und ein Magnetventil umfaßt, welches den Betrieb des Führungsventiles verursacht,

**dadurch gekennzeichnet,**

daß der Verteiler einen Führungsventil-Betriebsschaltkreis einschließt, um das Führungsventil während ausgewählter Intervalle zu betätigen, um das Führungsventil von Öl oder Wasser zu befreien, das sich darin ansammeln kann, wobei der Betrieb des Führungsventiles ein Bewegen der Ablenkvorrichtung (16) aus ihrer Abgabelage verursacht, wobei diese Bewegung jedoch nicht ausreichend ist, um die Ablenkvorrichtung ihre Abweislage erreichen zu lassen, und daß der Schaltkreis einen Dauerzähler zum Betätigen des Magnetventiles und somit des Führungsventiles während einer bestimmten Zeit, die nicht ausreicht, um eine vollständige Bewegung der Ablenkvorrichtung (16) aus ihrer Abgabelage in ihre Abweislage zu verursachen, einen Frequenzzähler, der bei einer gewählten Frequenz arbeitet, eine Einrichtung zum Auswählen der vorbestimmten Betriebszeit des Dauerzählers und eine Einrichtung umfaßt, um die Auswahl der vorbestimmten Zeit und der ausgewählten Frequenz außerhalb vorbestimmter Zeit- und Frequenzbereiche zu verhindern.

2. Tropfenverteiler nach Anspruch 1, dadurch gekennzeichnet, daß das Interzeptorventil (22) eine Feder (23) zum Vorspannen der Ablenkvorrichtung (16) in die Abweislage einschließt.

# FIG. 1

FEEDER

SHEARS

## FIG. 2

FREQUENCY COUNTER
0200

DURATION COUNTER
0060

PILOT VALVE MAINTANENCE CIRCUIT

ON

RESET

RESET

ON

OFF

OFF

SOLENOID VALVE

PILOT VALVE

22

# FIG. 3

**FIG. 4**